# EUROPÄISCHE PATENTANMELDUNG

(11) **EP 1 239 651 A1**
(43) Veröffentlichungstag der Anmeldung: **11.09.2002**
(21) Anmeldenummer: 01130771.7
(22) Anmeldetag: 22.12.2001
(51) Int. Cl.: H04M 3/487

(54) **Verfahren und Vorrichtung zur Übertragung der Kennung des Netzbetreibers an die Telekommunikationsteilnehmer während des Verbindungsaufbaus eines Telephonanrufes**

(30) Priorität: 28.02.2001 DE 10109472
(71) Anmelder: Deutsche Telekom AG, 53113 Bonn (DE)
(72) Erfinder: Hinrichs, Hermann, 26131 Oldenburg (DE)

(57) **Zusammenfassung**

Die Erfindung betrifft Verfahren und eine Vorrichtung zum Übertragen von zusätzlichen Informationen für Telekommunikationsteilnehmer 12, 18 über Telekommunikationsendgeräte 24, 26 mit Hilfe eines Telekommunikationsnetzes 10 mit Netzanschlüssen 14, 20, Netzzugangsleitungen 16, 22, Vermittlungseinrichtungen 28, 30 und Verbindungsleitungen 32 eines Netzbetreibers, wobei ein erster Telekommunikationsteilnehmer 12, der in einer ersten Verbindungsphase - Verbindungsaufbau - zu mindestens einem zweiten Telekommunikationsteilnehmer 18 über das Telekommunikationsnetz 10 eine Verbindung aufbaut, in der diese zusätzlichen Informationen an die Telekommunikationsteilnehmer 12, 18 weitergeleitet werden, in einer anschließenden zweiten Verbindungsphase Daten, wie Sprachdaten und ähnliches, zwischen den Telekommunikationsteilnehmern 12, 18 übermittelt werden, und in einer dritten Verbindungsphase - Verbindungsabbau - die Beendigung der Verbindung stattfindet. Erfindungsgemäß dienen diese zusätzlichen Informationen für die Telekommunikationsteilnehmer (12, 18) zur Identifikation des Netzbetreibers.

## Beschreibung

Die Erfindung betrifft ein Verfahren zum Übertragen von zusätzlichen Informationen für Telekommunikationsteilnehmer gemäß der im Oberbegriff des Anspruches 1 angegebenen Art, sowie eine Vorrichtung zur Durchführung des Verfahrens gemäß Anspruch 16.

Bekanntlich ist in der Telekommunikationstechnik das Herstellen einer Verbindung über das Telekommunikationsnetz in drei so genannte Verbindungsphasen eingeteilt, nämlich einer Verbindungsaufbau-, einer Nachrichtenübertragungs- und einer Verbindungsabbauphase.

In der ersten Phase erfolgt der Verbindungsaufbau zwischen den beteiligten Telekommunikationspartnern, also die Herstellung einer Verbindung über die im Telekommunikationsnetz befindlichen und für den Verbindungsaufbau benötigten Vermittlungseinrichtungen zu dem zweiten Telekommunikationsteilnehmer.

Unter einer Vermittlungseinrichtung versteht man dabei denjenigen Teil eines Telekommunikationsnetzes, an dem durch die Auswertung vermittlungstechnischer Informationen Teilabschnitte des Telekommunikationsnetzes zu einer Verbindung zusammengefügt werden. In der Telekommunikationstechnik werden Orte, an denen sich Vermittlungseinrichtungen im Telekommunikationsnetz befinden, vereinfacht als Netzknoten oder auch Vermittlungsstellen bezeichnet.

Während des Verbindungsaufbaus werden so genannte Signalisierungsinformationen zwischen den Telekommunikationsteilnehmern und den beteiligten Vermittlungseinrichtungen ausgetauscht. Der erste Telekommunikationsteilnehmer initiiert diesen Prozess der Übertragung der Signalisierungsinformationen beispielsweise durch die Abnahme des Hörers seines Telekommunikationsendgerätes.

Mit der Abnahme des Hörers führt der erste Telekommunikationsteilnehmer eine Belegung von Einrichtungen einer nächsten, ihm zugeordneten Vermittlungseinrichtung durch. Sind noch Kapazitäten für die Bearbeitung des Verbindungswunsches frei, so erhält der erste Telekommunikationsteilnehmer als positives Quittungssignal einen Wählton übermittelt.

Durch die anschließende Eingabe der gewünschten Rufnummer teilt der erste Telekommunikationsteilnehmer mit, welche andere Endeinrichtung angesprochen werden soll. Entsprechend der eingegebenen Rufnummer erfolgt die Durchschaltung der Verbindung zu der gerufenen Endeinrichtung, also zu dem zweiten Telekommunikationsteilnehmer. Das Durchschalten der Verbindung erfolgt dabei in der Regel über mehrere Netzknoten des Telekommunikationsnetzes.

Ist die Verbindung erfolgreich geschaltet, wird der zweite Telekommunikationsteilnehmer gerufen, d. h. bei dem zweiten Telekommunikationsteilnehmer ertönt beispielsweise ein Klingelzeichen, während dem ersten Telekommunikationsteilnehmer der Verbindungsaufbau durch Übermittlung des Ruftons mitgeteilt wird.

Nimmt der zweite Telekommunikationsteilnehmer den Anruf entgegen, kann die Verbindung in die zweite Phase eintreten. Der die erste Phase kennzeichnende Prozess des Austausches von Signalisierungsinformationen ist damit abgeschlossen.

In der zweiten Phase der Verbindung erfolgt der eigentliche Informationsaustausch zwischen den beteiligten Telekommunikationsteilnehmern.

Die dritte Phase der Verbindung ist der Verbindungsabbau, der von einem der beteiligten Telekommunikationsteilnehmer, beispielsweise durch Auflegen des Hörers seines Telekommunikationsendgerätes, ausgelöst wird. Die beteiligten Einheiten der Vermittlungseinrichtungen werden wieder freigegeben.

Nachteilig bei dem beschriebenen, herkömmlichen Verbindungsaufbau ist, dass der vermittelnde Telekommunikationsnetzbetreiber anonym bleibt, und somit den beteiligten Telekommunikationsteilnehmern die Information, welcher Netzbetreiber die Verbindung hergestellt hat, nicht zur Verfügung steht. Eine kundenseitige Identifizierung mit dem vermittelnden Telekommunikationsnetzbetreiber ist dadurch ausgeschlossen.

Der Erfindung liegt die Aufgabe zugrunde, ein Verfahren zur Übertragung von zusätzlichen Informationen für Telekommunikationsteilnehmer gemäß der im Oberbegriff des Anspruches 1 genannten Art derart weiterzubilden, dass unter Vermeidung der genannten Nachteile den beteiligten Telekommunikationsteilnehmern während des Verbindungsaufbaus ausgewählte Informationen zur Verfügung gestellt werden.

Diese Aufgabe wird für das Verfahren durch die kennzeichnenden Merkmale des Anspruches 1 in Verbindung mit seinen Oberbegriffsmerkmalen und für die Vorrichtung durch den Anspruch 16 gelöst.

Der Erfindung liegt die Erkenntnis zugrunde, dass durch die Übermittlung von zusätzlichen Informationen den Netzbetreibern eine neue Form der Präsentation zur Verfügung gestellt wird. Die Weitergabe der Information, welcher Netzbetreiber die Telekommunikationsverbindung aufgebaut hat, an die beteiligten Telekommunikationsteilnehmer festigt bzw. stärkt die Bindung der Telekommunikationsteilnehmer an den vermittelnden Netzbetreiber.

Nach der Erfindung werden daher den beteiligten Telekommunikationsteilnehmern, die mit Hilfe eines Telekommunikationsnetzes eines Netzbetreibers eine Verbindung über das Telekommunikationsnetz herstellen, zusätzliche Informationen, die der Identifikation des Netzbetreibers dienen, übermittelt. Zu diesem Zweck baut ein erster Telekommunikationsteilnehmer über das Telekommunikationsnetz des Netzbetreibers in einer ersten Verbindungsphase - Verbindungsaufbau - mit mindestens einem zweiten Telekommunikationsteilnehmer eine Verbindung auf. Die Übermittlung der zusätzlichen Informationen erfolgt dabei in der ersten Verbindungsphase. In der anschließenden zweiten Verbindungsphase werden Daten, wie beispielsweise Sprachdäten und ähnliches, zwischen den Telekommunikationsteilnehmern übermittelt. Die folgende dritte Verbindungsphase - Verbindungsabbau - ist gekennzeichnet durch den Abbau der über das Telekommunikationsnetz hergestellten Verbindung.

Nachweislich spielt der Bekanntheitsgrad einer Marke eines Produktes oder das Firmenschlagwort eine wichtige Rolle im Konsumverhalten der Konsumenten, d. h, je größer der Bekanntheitsgrad einer Marke eines Produktes oder das Firmenschlagwort ist, desto eher ist der Konsument bereit, dieses Produkt zu kaufen bzw. die Dienstleistung dieser Firma zu nutzen. Dieser Aspekt wird durch die Übermittlung der zusätzlichen Information, welcher Netzbetreiber die Verbindung hergestellt hat, berücksichtigt. Durch diese zusätzliche Information wird der vermittelnde Netzbetreiber präsent und offenkundig, der Telekommunikationsteilnehmer nimmt eine Auswahl unter den Netzbetreibern vor, sucht sich den Netzbetreiber aus, den er für seine Ansprüche am besten hält, und zeigt dies den anderen Telekommunikationsteilnehmern.

Die Übermittlung der zusätzlichen Informationen an die Telekommunikationsteilnehmer erfolgt dabei erst nach Eingang eines Auslösesignals in einer Vermittlungseinrichtung des Telekommunikationsnetzes.

Vorzugsweise erfolgt die Ausgabe der zusätzlichen Informationen akustisch über ein Telekommunikationsendgerät, d. h., der Netzbetreiber wird angesagt.

Gemäß einer Ausführung der Erfindung werden die zusätzlichen Informationen zeitversetzt in Bezug auf ihre Übermittlung ausgegeben. Dadurch wird sichergestellt, dass die Ausgabe der zusätzlichen Informationen erst dann erfolgt, nachdem beispielsweise der zweite Telekommunikationsteilnehmer das ankommende Gespräch angenommen und den Hörer seines Telekommunikationsendgerätes an sein Ohr herangeführt hat.

Nach einer anderen Ausführungsform der Erfindung werden die zusätzlichen Informationen optisch über ein Telekommunikationsendgerät ausgegeben. Beispielsweise werden dem Telekommunikationsteilnehmer die zusätzlichen Informationen auf dem Display seines Telekommunikationsendgerätes angezeigt.

Die Kombination der beiden Ausgabeformen und folglich die gleichzeitige akustische und optische Ausgabe der zusätzlichen Informationen über ein Telekommunikationsgerät ist gemäß einer weiteren Ausführungsform der Erfindung realisiert.

Vorzugsweise wird das Auslösesignal für die Vermittlungseinrichtung und somit für die Übermittlung der zusätzlichen Informationen von dem ersten Telekommunikationsteilnehmer in der ersten Verbindungsphase generiert. Der erste Telekommunikationsteilnehmer veranlasst in der ersten Verbindungsphase die Kommunikationsbeziehung über das Telekommunikationsnetz. Folglich ist nur der erste Telekommunikationsteilnehmer in der Lage, aktiv für das geplante Gespräch einen Netzbetreiber auszuwählen. Dieser Umstand, dass nur der erste Telekommunikationsteilnehmer Einfluss auf die Auswahl des vermittelnden Netzbetreibers hat, und dieser ausgewählter Netzbetreiber dem zweiten Telekommunikationsteilnehmer mittels den zusätzlichen Informationen vorgestellt wird, findet damit Berücksichtigung.

Bekanntlich initiiert der erste Telekommunikationsteilnehmer, also der Anrufer, in der ersten Verbindungsphase den Austausch von Signalisierungsinformationen zwischen den beteiligten Endeinrichtungen und Vermittlungseinrichtungen und zwischen den Vermittlungseinrichtungen untereinander. Gemäß einer weiteren Ausführungsform der Erfindung werden diese Signalisierungsinformationen als Auslösesignal für die Übermittlung der zusätzlichen Informationen durch die Vermittlungseinrichtung verwendet.

Unerheblich ist dabei, ob die das Auslösesignal verarbeitende Vermittlungseinrichtung als digitale oder als analoge Vermittlungseinrichtung ausgeführt ist. Dies hat den Vorteil, dass das Verfahren zum Übermitteln von zusätzlichen Informationen universell mit allen bereits bestehenden Telekommunikationsnetzen realisiert werden kann.

Die zusätzlichen Informationen sind gemäß einer Ausführungsform der Erfindung auf einem Speichermedium, wie einem Speicherchip, hinterlegt. Vorzugsweise ist das Speichermedium in den Vermittlungseinrichtungen integriert.

Die auf dem Speichermedium hinterlegten Informationen können bedarfsweise verändert werden. Dadurch wird der Netzbetreiber in die Lage versetzt, die zu übermittelnden zusätzlichen Informationen individuell einzustellen bzw. zwischen mehreren Optionen zu wechseln. So besteht beispielsweise die Möglichkeit, auf dem Speichermedium einen Ansagetext in der Form "Die Verbindung wurde durch die Deutsche Telekom hergestellt" zu hinterlegen. Aber auch die Hinterlegung einer markanten, netzbetreiberspezifischen Melodie, gegebenenfalls zusätzlich zum Ansagetext, ist möglich.

Da der Netzbetreiber in der Gestaltung der zusätzlichen Informationen vollkommen freigestellt ist, können auch weiterführende Informationen übermittelt werden. So ist vorstellbar, dass diese weiterführenden Informationen beispielsweise Hinweise auf aktuelle Marketing-Maßnahmen des Netzbetreibers, wie die derzeitige Telekom "Aktiv Plus Aktion", oder auch aktuelle Produktinformationen, wie z. B. Vorstellung von "T-DSL", betreffen.

Aber auch die kommerzielle Vermarktung der zu übermittelnden zusätzlichen Information ist nunmehr ohne weiteres gewährleistet. So ist es beispielsweise auch möglich, dass der Netzbetreiber die Gestaltung der zusätzlichen Informationen Firmen für die Einspielung von Werbebotschaften zur Verfügung stellt. Dies könnte, wie aus dem TV-Spektrum bekannt, in Form einer Firmenpräsentation, z. B. "Dieses Gespräch wird Ihnen von der Firma XY präsentiert", erfolgen.

Der Netzbetreiber kann festlegen, wem die zusätzlichen Informationen übermittelt werden. So werden gemäß einer Ausführungsform der Erfindung die zusätzlichen Informationen nur dem zweiten Telekommunikationsteilnehmer übermittelt.

Nach einer weiteren Ausführungsform der Erfindung werden die zusätzlichen Informationen nur an den ersten Telekommunikationsteilnehmer übermittelt.

Auch die Kombination, also die Übermittlung der zusätzlichen Informationen an den ersten und den zweiten Telekommunikationspartner, ist nach einer anderen Ausführung der Erfindung möglich.

Weitere Vorteile, Merkmale und Anwendungsmöglichkeiten der vorliegenden Erfindung zum Übertragen von zusätzlichen Informationen ergeben sich aus der nachfolgenden Beschreibung in Verbindung mit dem in der Zeichnung dargestellten Ausführungsbeispiel.

Die Erfindung wird im folgenden anhand des in der Zeichnung dargestellten Ausführungsbeispiels näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeutet:

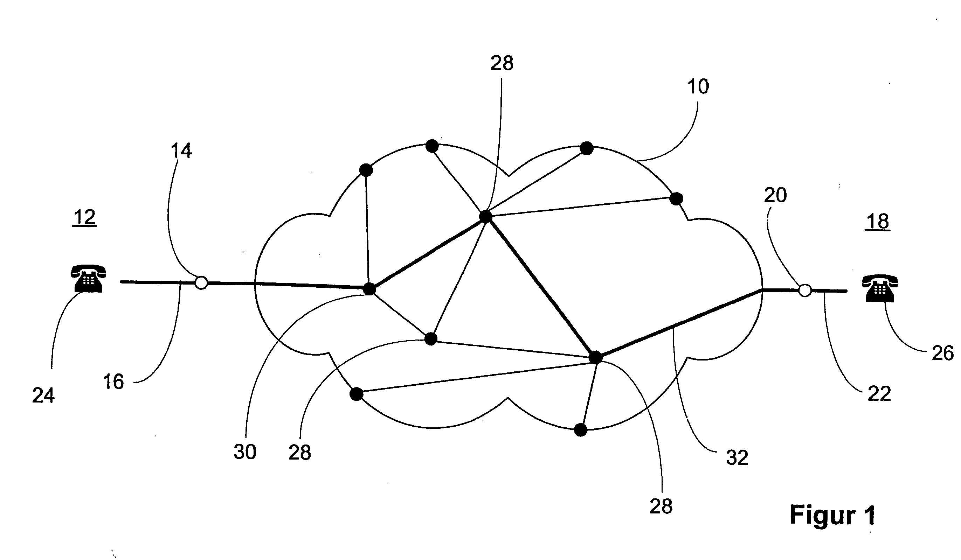

- Fig. 1: eine schematische Darstellung eines Telekommunikationsnetzes eines Netzbetreibers, an das zwei Telekommunikationsteilnehmer angeschlossen sind.

In Figur 1 ist schematisch ein Telekommunikationsnetz 10 eines Netzbetreibers dargestellt, an dem ein erster Telekommunikationsteilnehmer 12 über einen ersten Netzanschluss 14 und einer ersten Netzzugangsleitung 16 und ein zweiter Telekommunikationsteilnehmer 18 über einen zweiten Netzanschluss 20 und einer zweiten Netzzugangsleitung 22 angeschlossen sind.

Der erste Telekommunikationsteilnehmer 12 ist dabei über ein Telekommunikationsendgerät 24 und der zweite Telekommunikationsteilnehmer 18 über ein Telekommunikationsendgerät 26 mit dem Telekommunikationsnetz 10 verbunden.

Das dargestellte Telekommunikationsnetz 10 ist seinerseits aus einer Vielzahl von Vermittlungseinrichtungen 28, die vereinfacht auch als Vermittlungsstellen oder auch Netzknoten bezeichnet werden, aufgebaut.

In der Telekommunikationstechnik ist es üblich, den Aufbau einer Telekommunikationsverbindung über das Telekommunikationsnetz in drei sogenannte Verbindungsphasen einzuteilen. Die drei Phasen werden bekanntlich als Verbindungsaufbau-, Nachrichtenübertragungs- und Verbindungsabbauphase bezeichnet.

Wie im weiteren Verlauf noch näher dargelegt wird, erfolgt die erfindungsgemäße Übermittlung der zusätzlichen Informationen für die Telekommunikationsteilnehmer 12, 18 über das Telekommunikationsnetz 10 in der ersten Phase, der Verbindungsaufbauphase.

Der erste Telekommunikationsteilnehmer 12, der eine Verbindung über das Telekommunikationsnetz 10 aufbauen möchte, initiiert dabei den Aufbau der Verbindung beispielsweise durch die Abnahme des Hörers seines Telekommunikationsendgerätes 24.

Über die erste Netzzugangsleitung 16 und dem ersten Netzanschluss 14 erfolgt eine Belegung von Einrichtungen einer dem ersten Telekommunikationsteilnehmer 12 zugeordneten Vermittlungseinrichtung 30.

Kann die Belegung akzeptiert werden, d. h. ist eine Einrichtung frei zum Bearbeiten des Verbindungswunsches, wird das dem ersten Telekommunikationsteilnehmer 12 durch Übermittlung eines positiven Quittungssignals - Wählton - mitgeteilt.

Danach teilt der erste Telekommunikationsteilnehmer 12 durch Eingabe einer Rufnummer (wählen) mit, welche Endeinrichtung er ansprechen möchte.

Im vorliegenden Fall gibt der erste Telekommunikationsteilnehmer 12 die Rufnummer des zweiten Telekommunikationsteilnehmers 18 in sein Telekommunikationsendgerät ein.

Als Folge davon wird versucht, einen Verbindungsweg, gegebenenfalls unter Einbeziehung mehrerer Netzknoten bzw. Vermittlungseinrichtungen 28, 30 des Telekommunikationsnetzes 10, zu dem Netzanschluss 20 des ausgewählten zweiten Telekommunikationsteilnehmers 18 zu finden. Der gewählte Verbindungsweg wird dabei als Verbindungsleitung 32 bezeichnet.

Im vorliegenden Fall handelt es sich bei den im Telekommunikationsnetz vorhandenen Vermittlungseinrichtungen 28, 30 um digitalisierte Netzknoten.

Ist die Verbindungsleitung 32 geschaltet, wird der zweite Telekommunikationsteilnehmer 18 gerufen, beispielsweise durch ein Klingelzeichen oder ähnliches, und der erste Telekommunikationsteilnehmer 12 über den erfolgten Verbindungsaufbau benachrichtigt, d. h. der erste Telekommunikationsteilnehmer erhält als Quittungssignal z. B. einen Rufton oder dergleichen übermittelt.

Diese in der ersten Phase der Verbindung übermittelten Informationen zwischen den beiden Telekommunikationsteilnehmern 12, 18 und den Vermittlungseinrichtungen 28, 30, sowie zwischen den Vermittlungseinrichtungen 28, 30 untereinander werden als Signalisierungsinformationen bezeichnet.

Wie bereits beschrieben, hat der erste Telekommunikationsteilnehmer 12 die Telekommunikationsverbindung zu dem zweiten Telekommunikationsteilnehmer 18 initiiert, d. h. der erste Telekommunikationsteilnehmer 12 hat aktiv einen bestimmten Netzbetreiber, beispielsweise die Deutsche Telekom AG, ausgewählt. Im vorliegenden Ausführungsbeispiel der Erfindung wird diese Information, dass die Deutsche Telekom die Verbindung hergestellt hat, als zusätzliche Information zu dem zweiten Telekommunikationsteilnehmer 18 übermittelt.

Nach diesem Ausführungsbeispiel der Erfindung werden die zusätzlichen Informationen akustisch über das Telekommunikationsendgerät 26 des zweiten Telekommunikationsteilnehmers 18 ausgegeben. Dies kann beispielsweise über einen im Hörer integrierten Lautsprecher oder ähnliches erfolgen.

Als zusätzliche Information ist im vorliegenden Fall eine Sprachnachricht vorgesehen. Die Sprachnachricht, beispielsweise in Form von "Die Verbindung wurde von der Deutschen Telekom hergestellt", ist dabei auf Sprachchips hinterlegt, die ihrerseits in allen Vermittlungseinrichtungen des Netzbetreibers integriert sind.

Die Übermittlung der Sprachnachricht zu dem zweiten Telekommunikationsteilnehmer 18 erfolgt dabei erst nach Eingang eines Auslösesignals in einer Vermittlungseinrichtung 28 des Telekommunikationsnetzes 10 des Netzbetreibers. Im vorliegenden Ausführungsbeispiel der Erfindung werden die zusätzlichen Informationen nach Eingang des Auslösesignal in der Vermittlungseinrichtung 30 von dieser Vermittlungseinrichtung 30 zu dem zweiten Telekommunikationsteilnehmer 18 übermittelt.

Als Auslösesignal dienen die - wie im Vorfeld bereits näher erläutert, während der ersten Verbindungsphase zwischen den Telekommunikationsteilnehmern 12, 18 und den Vermittlungseinrichtungen 28, 30, sowie zwischen den Vermittlungseinrichtungen 28, 30 untereinander - übermittelten Signalisierungsinformationen.

Die Übermittlung der Signalisierungsinformationen werden durch den ersten Telekommunikationsteilnehmer 12 initiiert und somit erfolgt die Generierung der Signalisierungsinformationen durch den ersten, anrufenden Telekommunikationsteilnehmer 12. Wie bereits im Vorfeld beschrieben, werden in Folge der Signalisierung zunächst Einrichtungen einer Vermittlungseinrichtung 28 des Netzbetreibers belegt. Im vorliegenden Fall sind das Einrichtungen der dem ersten Telekommunikationsteilnehmer 12 zugeordneten Vermittlungseinrichtung 30. Diese Vermittlungseinrichtung 30 übermittelt, wie bereits ausgeführt, in diesem Fall auch die zusätzlichen Informationen.

Die an den zweiten Telekommunikationsteilnehmer 18 übermittelte Sprachnachricht wird zeitversetzt in Bezug auf ihre Übermittlung ausgegeben. Dies hat den Vorteil, dass beispielsweise die Zeitspanne, die zwischen Annahme des Gesprächs und Heranführen des Hörers an das Ohr besteht, berücksichtigt wird. Somit ist sichergestellt, dass die Ausgabe der Sprachnachricht erst dann erfolgt, wenn der zweite Telekommunikationsteilnehmer 18 auch die Möglichkeit hat, die Information wahrzunehmen.

Nach Übermittlung der zusätzlichen Information, im vorliegenden Fall die Information, dass die Verbindung von der Deutschen Telekom hergestellt wurde, schließt sich die zweite Phase der Telekommunikationsverbindung, die Nachrichtenübertragungsphase, an.

In bekannter Weise werden z. B. Sprachinformationen oder ähnliches über das Telekommunikationsnetz 10 zwischen den beteiligten Telekommunikationsteilnehmern 12, 18 übermittelt.

In der anschließenden dritten Phase der Verbindung erfolgt der Abbau der Telekommunikationsbeziehung.

Die Erfindung zeichnet sich dadurch aus, dass durch die Übertragung von zusätzlichen Informationen über das Telekommunikationsnetz dem die Verbindung herstellenden Netzbetreiber eine neue Form der Präsentation und somit eine kostenlose und effektive Werbemaßnahme zur Verfügung gestellt wird.

### BEZUGSZEICHENLISTE

- 10: Telekommunikationsnetz
- 12: erster Telekommunikationsteilnehmer
- 14: erster Netzanschluss
- 16: erste Netzzugangsleitung
- 18: zweiter Telekommunikationsteilnehmer
- 20: zweiter Netzanschluss
- 22: zweite Netzzugangsleitung
- 24: Telekommunikationsendgerät des ersten Telekommunikationsteilnehmers
- 26: Telekommunikationsendgerät des zweiten Telekommunikationsteilnehmers
- 28: Vermittlungseinrichtungen/Netzknoten
- 30: dem ersten Telekommunikationsteilnehmer zugeordnete Vermittlungseinheit
- 32: Verbindungsleitung

## Patentansprüche

1. Verfahren zum Übertragen von zusätzlichen Informationen für Telekommunikationsteilnehmer (12, 18) mit Hilfe eines Telekommunikationsnetzes (10) eines Netzbetreibers, wobei ein erster Telekommunikationsteilnehmer (12), der in einer ersten Verbindungsphase - Verbindungsaufbau - zu mindestens einem zweiten Telekommunikationsteilnehmer (18) über das Telekommunikationsnetz (10) eine Verbindung aufbaut, in der diese zusätzlichen Informationen an die Telekommunikationsteilnehmer (12, 18) weitergeleitet werden, in einer anschließenden zweiten Verbindungsphase Daten, wie Sprachdaten und ähnliches, zwischen den Telekommunikationsteilnehmern (12, 18) übermittelt werden, und in einer dritten Verbindungsphase - Verbindungsabbau - die Beendigung der Verbindung stattfindet, **dadurch gekennzeichnet, dass** diese zusätzlichen Informationen für die Telekommunikationsteilnehmer (12, 18) zur Identifikation des Netzbetreibers dienen.

2. Verfahren nach Anspruch 1, **dadurch gekennzeichnet, dass** die zusätzlichen Informationen nach Eingang eines Auslösesignals in einer Vermittlungseinrichtung (28, 30) des Telekommunikationsnetzes (10) an die Telekommunikationsteilnehmer (12, 18) übermittelt werden.

3. Verfahren nach einem der vorangehenden Ansprüche, **dadurch gekennzeichnet, dass** die zusätzlichen Informationen zeitversetzt in Bezug auf ihre Übermittlung ausgegeben werden.

4. Verfahren nach Anspruch 2, **dadurch gekennzeichnet, dass** der erste Telekommunikationsteilnehmer (12) in der ersten Verbindungsphase das Auslösesignal für die Vermittlungseinrichtung (28, 30) generiert.

5. Verfahren nach Anspruch 4, bei dem in der ersten Verbindungsphase Signalisierungsinformationen zwischen den beteiligten Telekommunikationsteilnehmern (12, 18) und Vermittlungseinrichtungen (28, 30) und den Vermittlungseinrichtungen (28, 30) untereinander übermittelt werden, **dadurch gekennzeichnet, dass** als Auslösesignal die Signalisierungsinformationen verwendet werden.

6. Verfahren nach einem der vorangehenden Ansprüche, **dadurch gekennzeichnet, dass** eine digitale Vermittlungseinrichtung (28, 30) verwendet wird.

7. Verfahren nach einem der vorangehenden Ansprüche, **dadurch gekennzeichnet, dass** eine analoge Vermittlungseinrichtung (28, 30) verwendet wird.

8. Verfahren nach einem der vorangehenden Ansprüche, **dadurch gekennzeichnet, dass** die zusätzlichen Informationen auf einem Speichermedium in der Vermittlungseinrichtung (28, 30) hinterlegt werden.

9. Verfahren nach Anspruch 8, **dadurch gekennzeichnet, dass** die auf dem Speichermedium hinterlegten Informationen bedarfsweise verändert werden.

10. Verfahren nach einem der vorangehenden Ansprüche, **dadurch gekennzeichnet, dass** die zusätzlichen Informationen akustisch über ein Telekommunikationsendgerät (24, 26) ausgegeben werden.

11. Verfahren nach einem der vorangehenden Ansprüche, **dadurch gekennzeichnet, dass** die zusätzlichen Informationen optisch über ein Telekommunikationsendgerät (24, 26) ausgegeben werden.

12. Verfahren nach einem der vorangehenden Ansprüche, **dadurch gekennzeichnet, dass** die zusätzlichen Informationen gleichzeitig optisch und akustisch über ein Telekommunikationsendgerät (24, 26) ausgegeben werden.

13. Verfahren nach einem der vorangehenden Ansprüche, **dadurch gekennzeichnet, dass** die zusätzlichen Informationen nur an den ersten Telekommunikationsteilnehmer (12) übermittelt werden.

14. Verfahren nach einem der vorangehenden Ansprüche, **dadurch gekennzeichnet, dass** die zusätzlichen Informationen nur an den zweiten Telekommunikationsteilnehmer (18) übermittelt werden.

15. Verfahren nach einem der vorangehenden Ansprüche, **dadurch gekennzeichnet, dass** die zusätzlichen Informationen an beide Telekommunikationsteilnehmer (12, 18) übermittelt werden.

16. Vorrichtung zur Durchführung des Verfahrens nach einem der vorangehenden Ansprüche.
